# EUROPÄISCHE PATENTSCHRIFT

(11) **EP 3 116 327 B1**
(45) Veröffentlichungstag und Bekanntmachung des Hinweises auf die Patenterteilung: **07.11.2018**
(21) Anmeldenummer: 14709277.9
(22) Anmeldetag: 11.03.2014
(51) Int. Cl.: A23L 2/39, A23L 2/395, A23L 2/40, A23L 2/52, A23L 2/68

(54) **ENERGIE LIEFERNDES SPORTGETRÄNK**
ENERGY SPORT DRINK
BOISSON ENERGISANTE POUR SPORTIFS

(43) Veröffentlichungstag der Anmeldung: 18.01.2017
(73) Patentinhaber: Wunder, Iris, 2801 Katzelsdorf (AT); Hohensinner, Franz, 7035 Steinbrunn (AT); Dr. Erich Schaflinger GmbH, 8662 Mitterdorf (AT)
(72) Erfinder: WUNDER, Iris, A-2801 Katzelsdorf (AT)
(74) Vertreter: Puchberger & Partner Patentanwälte
(86) Internationale Anmeldenummer: PCT/EP2014/054656
(87) Internationale Veröffentlichungsnummer: WO 2015/135571

(56) Entgegenhaltungen:
- WO-A1-2010/059428
- WO-A1-2015/005124
- WO-A2-2007/035336
- WO-A2-2010/147751
- WO-A2-2014/093999
- AT-A1- 513 541
- US-A1- 2006 269 535

## Beschreibung

Die Erfindung bezieht sich auf ein Getränk aus wenigstens einem Kohlenhydrat, Natriumbikarbonat und wenigstens einer Speisesäure.

Derartige Getränke sind z.B. als Energiegetränke bekannt.

Die meisten dieser Getränke haben aufgrund der Speisesäure einen pH-Wert von etwa 3 bis 4, wobei diese Speisesäuren insbesondere für die Verbesserung der Konservierung und Stabilisierung des pH-Wertes eingesetzt sind. Es hat sich aber gezeigt, dass der saure pH-Wert, insbesondere bei Aufnahme von größeren Mengen derartiger Getränke, wie es beispielsweise durch Ausdauersportler erforderlich ist, den Zahnschmelz ganz beachtlich schädigt, da der Zahnschmelz zu etwa 95% aus dem Phosphat [Ca₅(PO₄)₃OH]x2 (Hydroxylapatit) besteht, der säurelöslich ist.

Derartige Getränke gehen beispielsweise aus der amerikanischen Patentanmeldung 2007/005936281 hervor, wobei diese Getränke aufgrund des CO² Gehaltes spritzig, also leicht brausend sind. Dies führt allerdings insbesondere bei raschem Trinken zu einem Gasstau im Magen bzw. Verdauungsbereich. Weiter sind aus US 2006/0269535 Getränke mit höheren pH-Werte bekannt.

Die Erfindung liegt der Aufgabe zu Grunde, ein Getränk der eingangsgenannten Art zu schaffen, bei welchem auch bei höherem Konsum der Zahnschmelz nicht beschädigt wird.

Erfindungsgemäß wird dies dadurch erreicht, dass das Getränk auf einem pH-Wert von 7,1 bis 7,5, vorzugsweise etwa 7,3, eingestellt ist. In diesem pH- Bereich ist eine Freisetzung von Kohlendioxid aus dem Bikarbonat geringer als im saureren Bereich, womit eine zu starke Gasentwicklung im Magen bzw. Darmbereich vermieden ist. Hinsichtlich der Schonung des Zahnschmelzes ist auch zu bedenken, dass insbesondere bei Ausdauersportarten die Speichelproduktion oft gering ist und saurere Getränke, speziell jene mit einem hohen Anteil an titrierbarer Säure, einen stark erosiven Effekt auf den Zahnschmelz haben. Weiters ist bei dem erfindungsgemäßen Getränk der bei basischen Getränken auftretende seifenartige Geschmack vermieden.

Erfindungsgemäß ist das eingesetzte Kohlenhydrat ausgewählt aus der Gruppe bestehend aus Glucose und/oder Fructose und/oder Saccharose und/oder Maltose und/oder Laktose und/oder Galaktose und/oder einem Glucosepolymere. Der Kohlenhydrat Anteil des Getränkes kann dabei aus den vorstehend genannten Verbindungen nach Bedarf zusammengestellt werden, wobei eine Kombination von Glucose und Fructose die Kohlenhydratoxidationsrate bis zu 50% gegenüber reiner Glucose steigern kann. Dies ist auch der Grund, warum viele Sport- bzw. Energiegetränke auf einer Glucose-Fructose Basis zusammengesetzt werden, um die größte exogene Kohlenhydratoxidation während der körperlichen Übungen zu ergeben.

Derartig Glucose-Fructose Kombinationen können aber insbesondere für Personen mit Fructose-Unverträglichkeit nachteilig sein. Die Fructose in derartigen Getränken kann nämlich im Magen/Darmbereich zu erheblichen Nebenwirkungen, wie Blähungen, Bauchschmerzen, Diarrhö, Übelkeit oder Reflux, führen.

Fructose ist ein Monosachorid, das über GLUT 5 Transporter aus dem Verdauungsbereich in die Enterozyten überführt wird. Im Hinblick auf die begrenzte Kapazität und die langsame Absorption von Fructose kann es zu einer physiologischen Kohlenhydrat-Missabsorption kommen, sobald mehr als die Toleranzgrenze von 35 bis 50g Fructose konsumiert werden. Die angeführten Symptome sind allerdings unphysiologisch, wenn weniger als 25g Fructose toleriert werden können.

Bevorzugt wird als Speisesäure, Zitronensäure und/oder Ascorbinsäure eingesetzt, da damit einerseits eine Verbesserung der Konservierung und anderseits eine Stabilisierung des pH-Werts erreicht wird. Diese Säuren sind auch geschmacklich ansprechend und physiologisch unbedenklich.

Erfindungsgemäss ist für eine entsprechend hohe Wirksamkeit des Getränkes dieses auf eine Osmolalität von 240-280 millimol pro Kilogramm eingestellt.

Bei einer bevorzugten Basismischung für das erfindungsgemäße Getränk kann der Kohlenhydratgehalt etwa 8 bis 12 Gewichtsprozent, der Natriumbikarbonatgehalt etwa 0,2 Gewichtsprozent und der Anteil an Speisesäure zwischen 0,07 und 0,13 Gewichtprozent betragen, wobei der Rest auf 100% Wasser und gegebenenfalls Aromen und/oder Farbstoffe sind.

Durch diese Kombination wird im Vergleich zu den herkömmlichen Energy Drinks eine gute Verträglichkeit, durch die Kombination von Fruktose und Glukose im Verhältnis 1:1 bzw. mit Saccharose die höchstmögliche exogene Kohlehydratoxidation gewährleistet. Somit besteht die Möglichkeit, während einer Ausdauerbelastung den Flüssigkeits-, Kohlenhydrat- und Natriumbedarf in entsprechender Osmolalität mittels eines basischen Getränks adäquat abzudecken. Dies wiederum bietet die Möglichkeit die Ausdauerkapazität zu verbessern bzw. die Zeit bis zur Erschöpfung im Rahmen einer körperlichen oder geistigen Belastung zu verlängern und außerdem bei länger dauernden Aktivitäten die Leistungsfähigkeit zu erhöhen bzw. die Regenerationszeit zu verkürzen.

Das Getränk zeichnet sich des Weiteren durch eine Kohlenhydratkonzentration von 8% bis 12% z.B. Glukose und Fruktose im Verhältnis 1:1, Glukose, Fruktose und Saccharose zu gleichen Teilen, bzw. Glukose in Kombination mit Saccharose aus. Nach momentanem Stand der Wissenschaft handelt es sich bei den oben angeführten Kohlenhydratkombinationen um den optimalen Kohlenhydratgehalt für ein Sportgetränk. Ein höherer Kohlenhydrat-Gehalt würde zu einer verzögerten Magenentleerung führen, was gerade im Sportbereich wieder zu gastrointestinalen Beschwerden führt. Durch die Kohlenhydratmenge wird ein konstanter Blutglukosespiegel und somit eine stabile Leistung gesichert und durch die hohe exogene Kohlenhydratoxidation kann bei der endogenen Kohlenhydratoxidation gespart werden. Bei niedriger Intensität der körperlichen Belastung wird durch die adäquate Kohlenhydratzufuhr vermehrt Muskelglykogen gebildet und dadurch wiederum Leberglykogen eingespart und dies alles, da die Kohlenhydratzufuhr in einer Konzentration von 8%-12% gezielter Einsatz von Kohlenhydraten je nach Kohlenhydratmischung eine hohe exogene Kohlenhydratoxidation garantiert.

Bei anderen Erfindungen wie z.B. US Patent 20070059362 A1 wird ein hypotones, isotones oder auch leicht hypertones Kohlenhydrat-Elektrolytgetränk beschrieben, allerdings findet sich keine Anmerkung, dass es sich hier um ein basisches Getränk handelt.

Laut Studien weisen die meisten Sportgetränke einen pH-Wert von durchschnittlich 3-4 auf und liegen somit im sauren Bereich, wobei der kritische Wert bekanntlich bei einem pH-Wert von 5,5 und darunter liegt. Eine Reihe von Studien zeigen auf, dass durch den Genuss säurehaltiger Getränke die Zahngesundheit negativ beeinflusst wird. Unter Zahnschmelzerosionen versteht man einen fortschreitenden und irreversiblen Prozess, bei dem der schützende Zahnschmelz durch die Säure angegriffen und abgebaut wird. Dies wird allerdings nicht durch Bakterien beeinflusst, sondern es handelt sich um einen rein chemischen Vorgang, der sowohl von der Säurezufuhr z.B. säurehaltigen Getränken, als auch von "Abpufferungsprozessen" wie z.B. inadäqutem Speichelfluss (Speichel dient der Abpufferung von Säuren und "spült" die Mundhöhle), usw. abhängig ist. Da gerade im Rahmen einer sportlichen Leistung oft wenig Speichel produziert wird und gleichzeitig säurehaltige Getränke zugeführt werden, ist der Effekt entsprechend Zahnschmelzschädigend.

Weiters sind die Kohlenhydratkombinationen und Mischungsverhältnisse nicht gezielt angegeben und es kann durch zu niedrigem Kohlenhydratanteil die gewünschte Leistungssteigerung nicht erreicht werden bzw. durch einen zu hohen Kohlenhydratanteil zu gastrointestinalen Nebenwirkungen kommen.

Die Erfindung kann sowohl als Tablette bzw. als Pulver hergestellt werden oder aber bereits als Fertiglösung in entsprechende Gefäße eingefüllt werden. Die Tablette bzw. das Pulver sollte in Kohlensäure freiem Wasser vorzugsweise Quellwasser aufgelöst werden, damit nicht durch die bereits vorhandene Kohlensäure das Säure-Base Verhältnis im Getränk gestört wird.

Nachstehend wird die Verträglichkeit eines fructosefreien erfindungsgemäßen Sportgetränks erläutert, wobei die Ergebnisse der Versuche in den angefügten Abbildungen sind graphisch wiedergegeben sind.

Das Getränk wurde im Rahmen einer Pilotstudie (Votum der Ethikkommission Graz per 04.06.2012) während eines mindestens einstündigen Ausdauertrainings hinsichtlich Verträglichkeit, Wirksamkeit und Geschmack von 20 Sportlern mit diagnostizierter Fruktosemalabsorption überprüft und mittels standardisiertem Fragebogen beurteilt.
Sowohl in Bezug auf die Verträglichkeit, die Wirksamkeit und den Geschmack lassen sich positive Resultate verzeichnen.

### Ergebnisse in Bezug auf die Verträglichkeit des Getränks

Die Fragen nach abdominellen Beschwerden fielen sehr unterschiedlich aus, wobei Beschwerden wie Blähungen, Völlegefühl, Bauchschmerzen, Übelkeit, Durchfall und Reflux anhand einer 5-teiligen Skala beurteilt wurden.
Diese umfasste die Begriffe: Keine (1), Leicht (2), Mäßig (3), Stark (4) und Sehr stark (5).

**Tabelle 1: Auftreten von abdominellen Beschwerden nach dem Genuss von 750 ml des fruktosefreien Sportgetränks im Rahmen eines Ausdauertrainings**

| | **M** | **SD** | **Median** | **Modus** | **Minimum** | **Maximum** |
|---|---|---|---|---|---|---|
| Blähungen | 1,30 | 0,43 | 1,00 | 1,00 | 1,00 | 2,00 |
| Völlegefühl | 1,08 | 0,24 | 1,00 | 1,00 | 1,00 | 2,00 |
| Bauchschmerzen | 1,10 | 0,31 | 1,00 | 1,00 | 1,00 | 2,00 |
| Übelkeit | 1,15 | 0,49 | 1,00 | 1,00 | 1,00 | 3,00 |
| Durchfall | 1,08 | 0,34 | 1,00 | 1,00 | 1,00 | 2,50 |
| Reflux | 1,25 | 0,47 | 1,00 | 1,00 | 1,00 | 2,00 |
| Verträglichkeit | 1,43 | 0,67 | 1,00 | 1,00 | 1,00 | 3,50 |

Der Mittelwert betrug hinsichtlich des Auftretens von Blähungen 1,3 ± 0,43, von Völlegefühl 1,08 ± 0,24, von Bauchschmerzen 1,1 ± 0,31, von Übelkeit 1,15 ± 0,49, von Durchfall 1,08 ± 0,34, von Aufstoßen bzw. Sodbrennen 1,25 ± 0,47.

Im Gesamten gesehen wurde die Verträglichkeit des fruktosefreien Sportgetränks mit 1,43 ± 0,67 beurteilt, wobei diese Beurteilung anhand des Schulnotensystems durchgeführt wurde.

Beurteilt man die oben angeführten Daten im Detail, so kann allgemein festgehalten werden, dass von einer guten Verträglichkeit des Sportgetränks ausgegangen werden kann.

Grundsätzlich kann man zusammenfassen, dass nach dem Trinken des fruktosefreien Sportgetränks 12 Probanden (60%) keine Beschwerden durch Blähungen hatten, obwohl laut Anamnesefragebogen 80% der Probanden generell oft unter Flatulenz litten. 18 Probanden (90%) verspürten kein Völlegefühl, obwohl die Daten laut Anamnesefragebogen zeigten, dass 30% der Probanden oft unter Völlegefühl litten. 18 Probanden (90%) bemerkten keine Bauchschmerzen, obwohl laut Anamnesefragebogen 35% der Probanden oft unter abdominellen Beschwerden litten. 18 Probanden (90%) zeigten keine Anzeichen von Übelkeit, obwohl laut Anamnesefragebogen 15% der Probanden angaben, häufig unter Übelkeit zu leiden. 19 Probanden (95%) hatten keine Probleme mit Diarrhoe, obwohl laut Anamnesefragebogen 15% der Probanden angaben, oft Durchfall zu haben und 14 Probanden (70%) bemerkten nach Genuss des Sportgetränks keinen Reflux, obwohl laut Anamnesefragebogen bei 10% der Probanden Reflux ein häufiges Problem darstellte.

Bei der Frage nach dem Reflux wurde zusätzlich von einigen Teilnehmern ergänzt, dass sie vermuteten, auf Grund der für sie persönlich recht großen Flüssigkeitsmenge von 750 ml, Probleme mit Sodbrennen bzw. Aufstoßen gehabt zu haben.

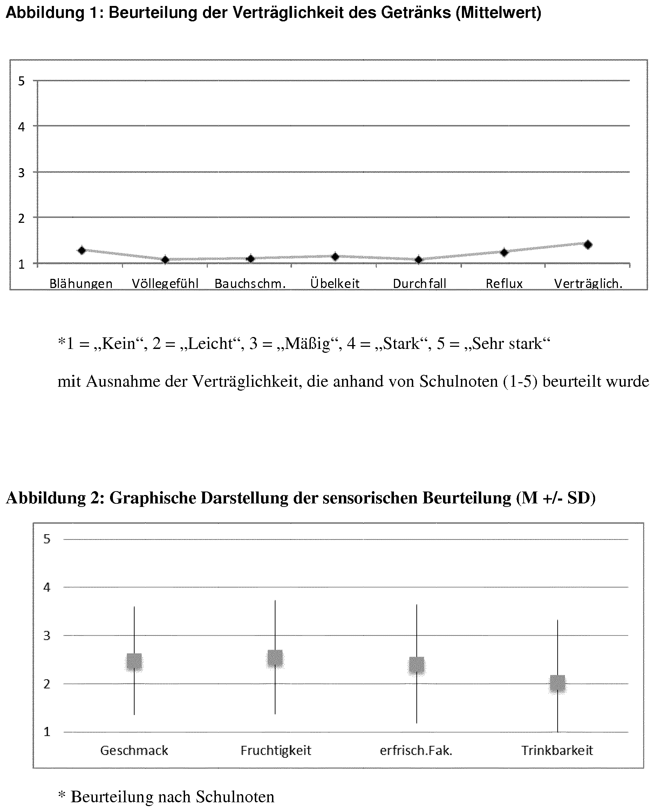

Die Frage, wie die allgemeine Verträglichkeit des Getränks von den Probanden empfunden wurde, ist von 12 Personen (60%) mit "sehr gut" beurteilt worden. 3 Teilnehmer (15%) stuften die Verträglichkeit auf 1,5 ein, weitere 3 Personen (15%) bezeichneten die Verträglichkeit als "gut" und jeweils 1 Teilnehmer (je 5%) gab die Note 2,5 bzw. 3,5 (Siehe Abbildung 1)

Die Frage nach Nebenwirkungen wurde nur von einer Person mit "Ja" beantwortet, wobei ergänzt werden muss, dass es sich hierbei um das Auftreten von Übelkeit auf Grund des Geschmacks des Getränks gehandelt hat.

Die Person wies dezidiert darauf hin, dass ihr das Getränk überhaupt nicht geschmeckt habe (der Geschmack wurde von ihr mit "Nicht Genügend" beurteilt) und dass die Ursache ihrer Übelkeit der für sie schlechte Geschmack bzw. Nachgeschmack des Getränks gewesen sei.

**Tabelle 2: Auftreten von Nebenwirkungen**

| | **Ja** | **%** | **Nein** | **%** |
|---|---|---|---|---|
| Nebenwirkungen | 1 | 5 | 19 | 95 |

Grundsätzlich kann zusammengefasst werden, dass in Bezug auf das Vorhandensein von Beschwerden vor Durchführung des Tests und nach Genuss des Getränks kein signifikanter Zusammenhang besteht.

In Bezug auf die Intensität der Belastung konnte keine signifikante Korrelation festgestellt werden. Entgegen dem Erwarten, gab es keinen Zusammenhang zwischen abdominellen Beschwerden und einer vermehrten körperlichen Anstrengung.

Hinsichtlich der Beschwerden gab es eine hohe positive Korrelation (p=0,016) zwischen dem Auftreten eines Völlegefühls und Aufstoßen bzw. Sodbrennen nach dem Genuss von 750 ml fruktosefreiem Sportgetränk.

Auch das Auftreten von Bauchschmerzen und Diarrhoe wies eine hohe positive Korrelation (p=0,001) auf, genauso wie Bauchschmerzen und allgemein schlechte Verträglichkeit (p=0,001) des Getränks.

Dasselbe Ergebnis konnte für das Auftreten von Diarrhoe und das Angeben einer schlechten Verträglichkeit festgestellt werden (p=0,00).

### Ergebnisse in Bezug auf die Wirksamkeit des Getränks

Hinsichtlich der Wirksamkeit wurden nur 2 Parameter abgefragt, welche wiederum als sehr subjektiv beurteilt werden müssen. Da das Ziel der Studie primär die Überprüfung der Verträglichkeit und des Geschmacks des fruktosefreien Sportgetränks umfasste und ausreichend Evidenz in Bezug auf die Wirksamkeit einer Kohlenhydrat-, Natrium- und Flüssigkeitszufuhr vorliegt, wurden diesem Thema nur zwei Fragen gewidmet. Zum einen das Auftreten von Muskelkrämpfen während des Ausdauertrainings, zum anderen das subjektive Empfinden, wie sich das Getränk auf die Leistungsfähigkeit ausgewirkt hat.

Von den insgesamt 20 Probanden gab es nur einen Sportler (5%), der die Frage nach dem Auftreten von Muskelkrämpfen mit "mäßig" beurteilte, wobei er zusätzlich anmerkte, das dies seiner Meinung nach, mit der für ihn extremen Intensität des Trainings zusammenhing.

95% der Teilnehmer verneinten die Frage, ob Muskelkrämpfe aufgetreten seien.

Hinsichtlich der Leistungsfähigkeit kann man zusammenfassen, dass sich das Getränk im Durchschnitt als positiv erwies, was in der folgenden Tabelle dargestellt wird.

**Tabelle 3: Auswirkung des Sportgetränks auf die Leistungsfähigkeit**

| | **Sehr positiv** | **Positiv** | **Gar nicht** | **Negativ** | **Sehr negativ** |
|---|---|---|---|---|---|
| Auswirkung auf die Performance | 30% | 35% | 30% | 5% | 0% |

### Ergebnisse in Bezug auf die Sensorik

Nach Genuss des Sportgetränks wurde der Geschmack im Durchschnitt mit 2,48 ± 1,12 beurteilt (Schulnoten), wobei 3 Personen (15%) den Geschmack als "Sehr gut" bezeichneten und 1 Person (5%) gab die Note 1,5.

Sechs Personen (30%) befanden das Getränk als "Gut", drei Personen (15%) benoteten mit 2,5. Viermal (20%) wurde die Note "Befriedigend" gegeben, einmal (5%) 3,5 und zwei Probanden (10%) bezeichneten den Geschmack als "Nicht genügend".

Auch die Frage hinsichtlich der Fruchtigkeit wies ähnliche Ergebnisse auf.

Fünf Probanden (25%) vergaben die Note "Sehr gut", vier Personen (20%) bezeichneten die Fruchtigkeit als "Gut", sechs Personen (30%) als "Befriedigend". Jeweils zwei Sportler (je 10%) bewerteten mit 3,5 bzw. "Genügend" und ein Proband (5%) hielt die Fruchtigkeit für "Nicht genügend".

Daraus ergab sich ein Mittelwert von 2,55 ± 1,18.

Der erfrischende Faktor wurde durchschnittlich mit 2,41 ± 1,23 erfasst.

Dies wiederum setze sich aus fünf (25%) "Sehr gut", sechs (30%) "Gut", drei (15%) 2,5, zwei (10%) "Befriedigend", zwei (10%) "Genügend", einem (5%) 4,75 und einem (5%) "Nicht genügend" zusammen.

In Bezug auf die Trinkbarkeit gaben 10 Probanden (50%) an, dass das Getränk "Sehr gut" trinkbar sei.

In Anbetracht der Tatsache, dass innerhalb 1 Stunde eine Trinkmenge von 750 ml vorgegeben war, so ist dieses Ergebnis ausgesprochen positiv.

Vier Personen (20%) beurteilten die Trinkbarkeit als "Gut", zwei Probanden (10%) als "Befriedigend", einmal (5%) wurde die Note 3,5 vergeben, zweimal (10%) ein "Genügend" und einmal (5%) ein "Nicht genügend".

Hier konnte ein Mittelwert von 2,03 ± 1,28 errechnet werden.

Um einem besseren Überblick zu schaffen, werden die Details bzw. ausgewerteten Daten noch einmal in Tabellenform (siehe Tabelle 4 und Tabelle 5) dargestellt.

**Tabelle 4: Sensorische Detailbenotung des fruktosefreien Sportgetränks**

| | **Sehr gut 1-1,99** | **Gut 2-2,99** | **Befriedigend 3-3,99** | **Genügend 4-4,99** | **Nicht genügend** |
|---|---|---|---|---|---|
| | 20% | 45% | 25% | 0% | 10% |
| Fruchtigkeit | 25% | 20% | 40% | 10% | 5% |
| Erfr. Faktor | 25% | 45% | 10% | 15% | 5% |
| Trinkbarkeit | 50% | 20% | 15% | 10% | 5% |

**Tabelle 5: Sensorische Beurteilung des fruktosefreien Sportgetränks**

| | **M** | **SD** | **Median** | **Modus** | **Minimum** | **Maximum** |
|---|---|---|---|---|---|---|
| Geschmack | 2,48 | 1,12 | 2,25 | 2 | 1,00 | 5,00 |
| Fruchtigkeit | 2,55 | 1,18 | 3,00 | 3 | 1,00 | 5,00 |
| Erfrischender Faktor | 2,41 | 1,23 | 2,00 | 2 | 1,00 | 5,00 |
| Trinkbarkeit | 2,03 | 1,28 | 1,50 | 1 | 1,00 | 5,00 |

Die Beurteilung des Geschmacks, der Fruchtigkeit, des erfrischenden Faktors und der Trinkbarkeit erfolgte anhand von Schulnoten, wobei "1" wiederum für "Sehr gut" bis hin zu "5" für "Nicht genügend" steht.

Zur Verdeutlichung der Mittelwerte ± Standardabweichung dient Abbildung 2:
Bei der Süße, die anhand einer "Just about right Scala" qualifiziert wurde, muss die Bewertung etwas anders beurteilt werden. Die Zahl "Null" wurde als "gerade richtig süß" definiert und die Richtung "zu süß" war mit 1 bzw. 2 und "zu wenig süß" mit -1 bzw. -2 anzugeben.

Dies bedeutet, dass bei einem Mittelwert von 0,3 ± 0,8 die Süße im Durchschnitt als gerade richtig bis leicht zu süß empfunden wurde, was wiederum von allen Seiten her betrachtet (Mittelwert und Einzelwertungen) als sehr positive Beurteilung bezeichnet werden kann.

Im Detail kann man sagen, dass 12 Personen (60%) die Süße des Getränks als optimal bzw. gerade richtig empfanden, 2 Personen (10%) beurteilten es als "etwas zu wenig süß", 4 Personen (20%) war das Sportgetränk "etwas zu süß" und 2 Teilnehmer bezeichneten es als "viel zu süß".

**Tabelle 6: Beurteilung der Süße**

| | **M** | **SD** | **Median** | **Modus** | **Minimum** | **Maximum** |
|---|---|---|---|---|---|---|
| Süße* | 0,30 | 0,80 | 0,00 | 0 | -1,00 | 2,00 |

| | | | | | | |
|---|---|---|---|---|---|---|
| * Die Süße wurde mittels einer 5-teiligen Skala abgefragt, wobei "-2" für "viel zu wenig süß", "-1" für "zu wenig süß", "0" für "gerade richtig", "1" für "zu süß" und "2" für" viel zu süß" stand. | | | | | | |

Die vorliegende Studie zeigt, dass sowohl die Verträglichkeit, die Wirksamkeit und der Geschmack des neu entwickelten fruktosefreien Sportgetränks positive Resultate aufweisen.

Fasst man alle Ergebnisse zusammen, so kann man sagen, dass 100% jener Sportler die regelmäßig Sportgetränke trinken, das Getränk weiterempfehlen würden. Von jenen, die selten bis nie Sportdrinks konsumieren (somit den Natrium-Beigeschmack nicht gewöhnt sind), würden 87,5% das Getränk weiterempfehlen und im Gesamten gesehen, haben 90% der Teilnehmer auf die Frage, ob sie das fruktosefreie Sportgetränk weiterempfehlen würden, mit "Ja" geantwortet.

## Patentansprüche

1. Getränk, welches wenigstens ein Kohlenhydrat, Natriumbicarbonat und wenigstens eine Speisesäure enthält, **dadurch gekennzeichnet, dass** das Kohlenhydrat ausgewählt ist, aus einem oder mehreren Kohlenhydraten der Gruppe bestehend aus Glukose, Fruktose, Laktose, Saccharose, Maltose, Galaktose und Glukosepolymer und das Getränk auf einen pH-Wert von 7,1 bis 7,5, vorzugweise etwa 7,3 und auf eine Osmolalität von 240-280 mmol/kg eingestellt ist.

2. Getränk nach Anspruch 1, **dadurch gekennzeichnet, dass** als Speisesäure zur Verbesserung der Konservierung und Stabilisierung des pH-Wertes Zitronensäure und/oder Ascorbinsäure eingesetzt ist.

3. Getränk nach einem der Ansprüche 1 oder 2, **dadurch gekennzeichnet, dass** der Kohlenhydratgehalt etwa 8-12 Gewichtsprozent, der Natriumbicarbonatgehalt etwa 0,2 Gewichtsprozent und der Anteil an Speisesäure zwischen 0,07 und 0,13 Gewichtsprozent beträgt, wobei der Rest auf 100% Wasser und gegebenenfalls Aromen und/oder Farbstoffe sind.

4. Verfahren zur Herstellung eines Getränks nach den Ansprüchen 1 bis 3, **dadurch gekennzeichnet, dass** eine Mischung enthaltend Glukose, Fruktose, Saccharose, Maltose, Laktose, Galaktose, Glukosepolymere, Natriumbicarbonat sowie Zitronensäure oder Ascorbinsäure in Wasser gelöst wird.

5. Verfahren nach Anspruch 4, **dadurch gekennzeichnet, dass** die Mischung in Form einer Tablette, eines Pulvers oder in einer Fertiglösung vorliegt.

## Claims

1. A beverage which contains at least one carbohydrate, sodium bicarbonate and at least one food acid, **characterized in that** the carbohydrate is selected from one or more carbohydrates from the group consisting of glucose, fructose, lactose, saccharose, maltose, galactose and glucose polymers and the pH of the beverage is adjusted to 7.1 to 7.5, preferably approximately 7.3, and to an osmolality of 240 - 280 mmol/kg.

2. The beverage as claimed in claim 1, **characterized in that** citric acid and/or ascorbic acid is used as the food acid in order to improve the preservation and stabilization of the pH.

3. The beverage as claimed in claim 1 or claim 2, **characterized in that** the carbohydrate content is approximately 8 - 12 percent by weight, the sodium bicarbonate content is approximately 0.2 percent by weight and the proportion of food acid is in the range 0.07 to 0.13 percent by weight, wherein the remainder to 100 % is water and optional flavours and/or colourings.

4. A method for the manufacture of a beverage as claimed in claims 1 to 3, **characterized in that** a mixture containing glucose, fructose, saccharose, maltose, lactose, galactose, glucose polymers, sodium bicarbonate as well as citric acid or ascorbic acid is dissolved in water.

5. The method as claimed in claim 4, **characterized in that** the mixture is in the form of a tablet, a powder or is in a ready-to-use solution.

## Revendications

1. Boisson contenant au moins un glucide, du bicarbonate de sodium et au moins un acide alimentaire, **caractérisée en ce que** ledit glucide est choisi parmi un ou plusieurs glucides issus du groupe constitué de glucose, fructose, lactose, saccharose, maltose, galactose et de polymères de glucose et que ladite boisson est ajustée à un pH compris entre 7,1 et 7,5 qui est préférentiellement d'environ 7,3 et à une osmolalité comprise entre 240 et 280 mmol/kg.

2. Boisson selon la revendication 1, **caractérisée en ce que** l'on met en oeuvre, en tant qu'acide alimentaire destiné à améliorer la conservation et à stabiliser le pH, de l'acide citrique et/ou de l'acide ascorbique.

3. Boisson selon l'une des revendications 1 ou 2, **caractérisée en ce que** la teneur en glucides est comprise entre environ 8 et 12 % en poids, la teneur en bicarbonate est d'environ 0,2 % en poids et la teneur en acide alimentaire est comprise entre 0,07 et 0,13 % en poids, la partie qui manque pour compléter les 100 % étant constituée d'eau et, éventuellement, d'arômes et/ou de colorants.

4. Procédé de fabrication d'une boisson selon les revendications 1 à 3, **caractérisé en ce que** l'on dissout dans l'eau un mélange contenant du glucose, fructose, saccharose, maltose, lactose, galactose, des polymères de glucose, du bicarbonate de sodium ainsi de l'acide citrique ou de l'acide ascorbique.

5. Procédé selon la revendication 4, **caractérisé en ce que** ledit mélange se présente sous forme d'un comprimé, d'une poudre ou d'une solution prête à l'emploi.
